# EUROPEAN PATENT APPLICATION

(11) **EP 4 814 562 A1**
(43) Date of publication of application: **30.09.2026**
(21) Application number: 25165573.4
(22) Date of filing: 24.03.2025
(51) Int. Cl.: G02B 21/00, G02B 21/22, G02B 21/36, H04N 13/239

(54) **SYSTEM, METHOD AND COMPUTER PROGRAM FOR A SURGICAL IMAGING SYSTEM, SURGICAL IMAGING SYSTEM**

(71) Applicant: Leica Instruments (Singapore) Pte Ltd., Singapore 618299 (SG)
(72) Inventor: THEMELIS, George, 618299 Singapore (SG)
(74) Representative: 2SPL Patentanwälte PartG mbB

(57) **Abstract**

Examples relate to a system (110), a method, and a computer program for a surgical imaging system (100), and to a surgical imaging system comprising such a system. The system is configured to obtain a user input related to a desired change of a field of view of a surgical imaging device (130) to a desired field of view on the sample, obtain image data of the surgical imaging device, trigger the change of the field of view based on the user input, perform image processing on the obtained image data and/or on additional image data to emulate the desired field of view during a time interval between triggering the change of the field of view and completion of the change of the field of view, and provide a view on the sample based on the emulation of the desired field of view to a display device (140) of the surgical imaging system.

## Description

### Technical field

Examples relate to a system, a method, and a computer program for a surgical imaging system, and to a surgical imaging system comprising such a system.

### Background

In surgical procedures that depend on optical microscopes, accurately adjusting the observation angle is crucial. In general, there are two groups of techniques for adjusting the observation angle: manual manipulation of the microscope and relying on robotic arms for repositioning. In particular, modern robotic or motorized arms allow users to alter the microscope's position remotely. Nevertheless, these robotic mechanisms move slowly due to safety and mechanical constraints, causing a delay between the requested adjustment and its visual effect or feedback. This delay disrupts the user experience by making it less responsive and intuitive, which may deter surgeons from changing the observation angle. Additionally, this delay reduces intuitiveness by interrupting the surgeon's workflow and concentration. Moreover, it restricts swift assessment of different angles since users must await the physical movement of the microscope. This inefficiency can prolong surgical procedures.

Similar delays occur in other situations that depend on the physical movement of components of a surgical microscope system. For example, when changing the working distance or zoom level using an automated system, there is a delay due to the physical movement of the respective optical components.

There is a desire for a mechanism that enables surgeons to adjust a field of view swiftly and intuitively without having to wait for the microscope's physical movement.

### Summary

This desire is addressed by the subject matter of the independent claims.

Various examples of the present disclosure are based on the finding that many adjustments to the field of view change the field of view in a manner that can be emulated using digital image processing. For example, by digitally processing the available image data, changes in the field of view, such as optical zooming, changes in the working distance, but also changes in the observation angle can be emulated using existing image data. This emulation can be used as a stand-in while the mechanical components of the surgical microscope system are still in motion to achieve the desired field of view. Using such an emulated view, the delay perceived by the user (e.g., surgeon) in response to the user providing an input to change the field of view can be markedly reduced or eliminated. This improves the user experience and intuitiveness of the adjustments to the field of view, enabling surgeons to intuitively adjust the field of view without having to wait for the respective mechanical adjustments being completed.

Some aspects of the present disclosure relate to a system for a surgical imaging system. The system comprises one or more processors and one or more storage devices. The system is configured to obtain a user input related to a desired change of a field of view of a surgical imaging device to a desired field of view on the sample. The system is configured to obtain image data of the surgical imaging device. The system is configured to trigger the change of the field of view based on the user input. The system is configured to perform image processing on the obtained image data and/or on additional image data to emulate the desired field of view during a time interval between triggering the change of the field of view and completion of the change of the field of view. The system is configured to provide a view on the sample based on the emulation of the desired field of view to a display device of the surgical imaging system. By computing and using the emulated view, the delay perceived by the user (e.g., surgeon) in response to the user providing an input to change the field of view can be markedly reduced or eliminated, improving the user experience and intuitiveness of the adjustments to the field of view, and enabling surgeons to intuitively adjust the field of view without having to wait for the respective mechanical adjustments being completed.

The proposed concept is particularly suitable for scenarios, in which the input provided by the user already indicates the desired field on view and a (servo) motor or other mechanism is used to automatically perform a mechanical operation to achieve the desired field of view, controlled by the system. Thus, the system may be configured to trigger an automatic operation of the surgical imaging system to trigger the change of the field of view. In particular, the system may be configured to trigger the automatic operation to perform at least one of a lateral movement of the surgical imaging device, a point lock operation, a return-to-position movement, a zooming operation or an operation for changing working distance. These are automatic operations commonly provided by surgical microscope systems that have an impact on the field of view.

In various examples, the field of view is changed by moving (which includes rotations) the surgical imaging device using an automated imaging device positioning system, such as a robotic arm. In other words, the system may be configured to control an automated imaging device positioning system to control the field of view of the surgical imaging device. In particular, the change of the field of view may be based on the mechanical movement of the automated imaging device positioning system or of at least one optical element arranged at the automated imaging device positioning system. These are cases in which the time required for performing an adjustment is particularly long, as automated imaging device positioning systems, such as robotic arms, move slowly due to safety reasons. Therefore, the proposed concept provides an even greater improvement with respect to the reduction of delays and improvement of the workflow.

As the field of view changes (e.g., due to movement of the automated imaging device positioning system, or due to a progress of a zooming operation), the field of view of the image data obtained from the surgical imaging device changes progressively. Therefore, the image processing may be adapted to the changing field of view shown in the image data. In other words, the system may be configured to adapt the image processing based on a progress of the change of the field of view until the change of the field of view is completed. This way, the emulated view can be updated between the start and completion of the change of the field of view.

In many cases, the change in the field of view between start and completion of the change of the field of view is known, e.g., as automatic operations or automated imaging device positioning systems are well-characterized and mathematical operations suffice to estimate the field of view currently shown in the most recently obtained image data. If this is not the case, or to further improve the fidelity of the emulated view, metadata (representing the change in the field of view) of the image data may also be used to determine the current field of view. In other words, image frames of the image data may comprise metadata representing a current field of view of the surgical imaging device. The system may be configured to adapt the image processing based on the metadata representing the current field of view. This improves the fidelity of the emulated view.

There are various techniques that can be used for emulating the field of view, depending on the desired field of view. For example, the system may be configured to, if the desired change of the field of view includes a lateral movement of the field of view and/or an expansion of the field of view, emulate the desired field of view by controlling at least one optical imaging sensor of the surgical imaging device to expand a sensor portion being used to generate the image data. The system may be configured to generate the emulation of the desired field of view based on the expanded sensor portion. This expanded sensor portion, which may be omitted during normal operation to improve the sensor readout speed, can provide an increased field of view that allows for the emulation of the desired field of view.

Additionally, or alternatively, in case stereoscopic imaging is performed, the field of view of either channel can be expanded using image data from the respective other channel. In other words, the act of obtaining the image data may comprise obtaining stereoscopic image data of two optical imaging sensors of the surgical imaging device. The system may be configured to, if the desired change of the field of view includes a lateral movement of the field of view and/or an expansion of the field of view, generate the emulation of the desired field of view for one channel using the image data of the respective other channel. This way, the field of view can also be laterally shifted and/or expanded.

Another option for expanding or laterally moving the field of view is the use of another camera, such as an overview camera. For example, the system may be configured to, if the desired change of the field of view includes a lateral movement of the field of view and/or an expansion of the field of view, emulate the desired field of view based on additional image data of an additional imaging sensor providing a wider field of view than the surgical imaging device. While overview cameras often provide a lower resolution per unit area of the sample (due to lack of magnification), they are useful for the purpose of emulating the desired field of view.

There are various reasons for a lateral movement of the field of view, such as an x-y movement of the surgical imaging device, a return-to-position movement, or a point-lock function. In other words, the lateral movement of the field of view may be caused by one of: an x-y movement, a return-to-position movement, or a point-lock function being used to laterally rotate the field of view around a fixed point in the field of view.

One case where it is trivial to emulate the field of view is when the field of view is narrowed, e.g., due to an optical zoom operation or due to a change in the working distance. In this case, a digital zoom can be used to emulate the desired field of view. In other words, the system may be configured to, if the desired change of the field of view includes a narrowing of the field of view, generate the emulation of the desired field of view using a digital zoom functionality.

One technique for improving the fidelity of the emulated view uses a three-dimensional depth map of the sample as a starting point. A depth map of a sample is a three-dimensional representation of distances of points of the sample from a reference point, such as the surgical imaging system. Using digital image manipulation, image data from various sources can be projected onto the three-dimensional depth map to provide the emulation of the desired field of view. In other words, the system may be configured to obtain a three-dimensional depth map of the sample and to generate the emulated field of view based on the three-dimensional depth map of the sample and based on the image data and/or additional image data.

For example, a technique to interpolate an image corresponding to the chosen observation angle using a depth map derived from image disparity between stereo channels may be used for this purpose. Accordingly, the act of obtaining the image data may comprise obtaining stereoscopic image data of two optical imaging sensors of the surgical imaging device. The system may be configured to generate the three-dimensional depth map using stereo disparity analysis based on the stereoscopic image data. This way, a depth map may be used without requiring a dedicated depth sensor, reducing cost and complexity.

One technique that is particularly suitable for emulating a field of view using a three-dimensional depth map is image projection. In other words, the system may be configured to generate the emulated field of view using image projection based on the three-dimensional depth map of the sample and based on the image data and/or additional image data. In general, image projection is the process of mapping points from one space into another space. In many cases, image projection is used to project a three-dimensional object onto a two-dimensional image plane, simulating how a two-dimensional camera captures a three-dimensional scene. To generate the emulation of the desired field of view using image projection, mathematical operations may be used to transform the image information that is contained in the three-dimensional depth map of the sample into corresponding two-dimensional image information. These mathematical operations are based on the perspective of the respective two-dimensional image relative to the three-dimensional object. In particular, the pixels of the image data and/or the additional image data may first be projected onto the three-dimensional depth map, and then re-projected, from the three-dimensional depth map onto the image plane(s) used for the emulation of the desired field of view.

The same technique may also be used to remove or reduce the impact of obstructions in the field of view. For example, in stereoscopic imaging, two images are generated that show the sample from (slightly) different angles. If there is an obstruction present, it is likely that the obstruction impacts different areas of the sample, depending on the angle of view. In such cases, the images having different angles of view can be used to determine one or more areas of the sample that are only visible in one of the images (and thus obstructed in the other image(s)), and digital image processing techniques, such as image projection, can be used to generate an emulation of the desired field of view in which such obstructed areas are made visible using the images from the channel having a different angle of view on the sample. In other words, the act of obtaining the image data may comprise obtaining stereoscopic image data of two optical imaging sensors of the surgical imaging device. The system may be configured to determine, for at least one of the channels of the stereoscopic image data, an area being affected by an obstruction obscuring a view on the sample. The system may be configured to map one or more image segments of the respective other channel onto the area being affected by the obstruction. This way, the obstructions can be compensated for without interrupting the operator's workflow and without altering the microscope's position.

In general, the digital image processing performed by a surgical imaging system provides the highest possible fidelity for the surgeon. This may not be possible for the emulation, as the additional image processing may be computationally too expensive to run at the highest fidelity (with respect to image resolution and/or frame rate) and/or the image data being used for emulating the field of view has a lower fidelity than the image data being used during normal operation. Accordingly, the system may be configured to generate the emulation of the desired field of view with a lower frame rate and/or a lower image resolution compared to the frame rate or image resolution of the view of the sample prior to and/or after the change in the field of view.

Another aspect of the present disclosure relates to a surgical imaging system comprising the above system, the surgical imaging device and a display device. Optionally, the surgical imaging system may comprise an automated imaging device positioning system, such as a robotic arm, for controlling the field of view of the surgical imaging device on the sample.

Another aspect of the present disclosure relates to a corresponding method for a surgical imaging system. The method comprises obtaining a user input related to a desired change of a field of view of the surgical imaging device to a desired field of view on the sample. The method comprises obtaining image data of the surgical imaging device. The method comprises triggering the change of the field of view based on the user input. The method comprises performing image processing on the obtained image data and/or on additional image data to emulate the desired field of view during a time interval between triggering the change of the field of view and completion of the change of the field of view. The method comprises providing a view on the sample based on the emulation of the desired field of view to a display device of the surgical imaging system.

Another aspect of the present disclosure relates to a computer program having a program code for performing the above method when the program is executed on processor.

### Short description of the Figures

Some examples of apparatuses and/or methods will be described in the following by way of example only, and with reference to the accompanying figures, in which
- Fig. 1a: shows a block diagram of an example of a system for a surgical imaging system;
- Fig. 1b: shows a schematic diagram of an example of a surgical imaging system;
- Fig. 2: shows a schematic diagram of an example of a real-time image interpolation and angle adjustment system for stereo microscopes;
- Fig. 3: shows a flow chart of an example of a method for a surgical imaging system; and
- Fig. 4: shows a schematic diagram of an example of a system comprising an imaging device and a computer system.

### Detailed Description

Various examples will now be described more fully with reference to the accompanying drawings in which some examples are illustrated. In the figures, the thicknesses of lines, layers and/or regions may be exaggerated for clarity.

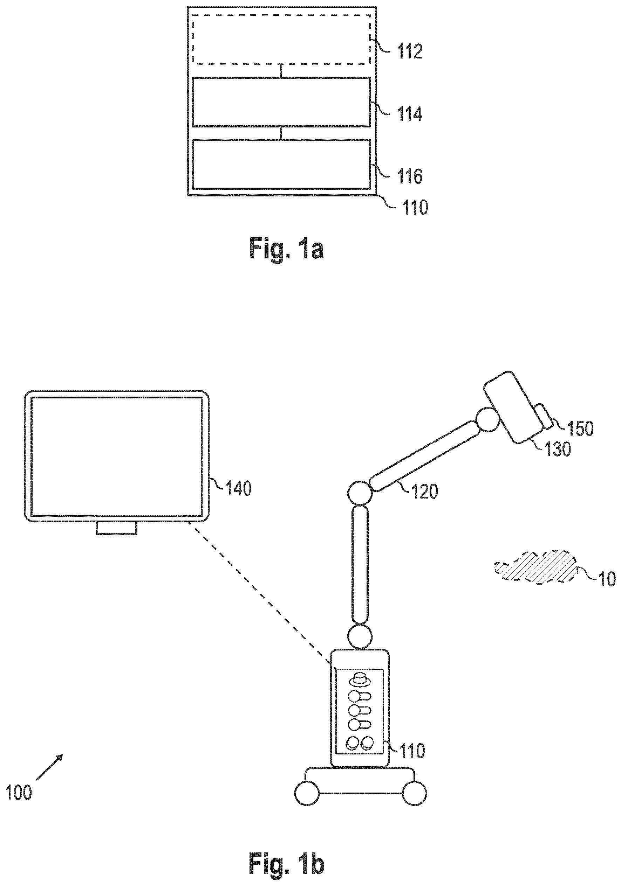

Fig. 1a shows a schematic diagram of an example of a system 110 for a surgical imaging system 100 (shown in Fig. 1b). The system 110 is a component of the surgical imaging system 100 and may be used to control various aspects of the surgical imaging system 100.

In particular, it may be used for acquisition and/or processing of imaging data by at least one optical imaging sensor of an imaging device 130 of the surgical imaging system, through various means that will be introduced in more detail in the following. In addition, the system 110 may be configured to control additional aspects of the surgical imaging system 100, e.g., to provide a display signal for one or more display devices 140a, 140b of the surgical imaging system, and/or to control and/or execute automatic operations of the surgical imaging system, e.g., using an automated imaging device positioning system, such as a robotic arm. For example, the surgical imaging system may comprise a robotic arm 120 (shown in Fig. 1b) as automated imaging device positioning system.

In general, the system 110 may be a computer system. The system 110 comprises one or more processors 114 and one or more storage devices 116. Optionally, the system 110 further comprises one or more interfaces 112. The one or more processors 114 are coupled to the one or more storage devices 116 and to the one or more interfaces 112. In general, the functionality of the system 110 may be provided by the one or more processors 114, in conjunction with the one or more interfaces 112 (for exchanging data/information with one or more other components of the surgical imaging system 100 and outside the surgical imaging system 100, such as an optical imaging sensor of the imaging device 130 or an automated imaging device positioning system 120), and with the one or more storage devices 116 (for storing information, such as machine-readable instructions of a computer program being executed by the one or more processors). In general, the functionality of the one or more processors 114 may be implemented by the one or more processors 114 executing machine-readable instructions. Accordingly, any feature ascribed to the one or more processors 114 may be defined by one or more instructions of a plurality of machine-readable instructions. The system 110 may comprise the machine-readable instructions, e.g., within the one or more storage devices 116.

As outlined above, the system 110 is part of the surgical imaging system 100, which comprises various components in addition to the system 110. For example, the surgical imaging system 100 comprises the imaging device 130, and may comprise one or more additional components, such as one or more display devices 140a-140b. Fig. 1b shows a schematic diagram of an example of such a surgical imaging system 100, and in particular of a surgical microscope system 100. In the following, the surgical imaging system 100 may also be referred to as surgical microscope system 100. A surgical microscope system is a surgical imaging system 100 that comprises a (surgical) microscope as imaging device 130. However, the proposed concept is not limited to such embodiments. The surgical imaging system 100 may be based on various (single or multiple) imaging devices, such as one or more microscopes, one or more endoscopes, and/or one or more exoscopes (also sometimes called an extracorporeal telescope). Exoscopes are camera-based imaging systems, and in particular camera-based 3D imaging systems, which are suitable for providing images of surgical sites with high magnification and a large depth of field. Compared to microscopes, which may be used via oculars, exoscopes are only used via display modalities, such as a monitor or a head-mounted display. Accordingly, the surgical imaging system 100 may alternatively be a surgical endoscope system, or a surgical exoscope system. The following illustrations assume that the surgical imaging device 130 is a surgical microscope, and that the surgical imaging system 100 is a surgical microscope system 100.

Accordingly, the surgical imaging system or surgical microscope system 100 may comprise an imaging device, such as a microscope 130. In general, a microscope, such as the microscope 130, is an optical instrument that is suitable for examining objects that are too small to be examined by the human eye (alone). For example, a microscope may provide optical magnification of a sample. In the present concept, the optical magnification is (also) provided for at least one optical imaging sensor. The microscope 130 thus comprises an optical imaging sensor, which is coupled with the system 110. The microscope 130 may further comprise one or more optical magnification components that are used to magnify a view on the sample, such as an objective (i.e., lens). For example, the surgical imaging device or microscope 130 is often referred to as the 'optics carrier' of the imaging system.

There are a variety of different types of surgical imaging devices. If the imaging device is used in the medical or biological fields, the object being viewed through the imaging device may be a sample of organic tissue, e.g., arranged within a petri dish or present in a part of a body of a patient. In various examples presented here, the imaging device 130 may be a microscope of a surgical microscope system, i.e., a microscope that is to be used during a surgical procedure, such as a neurosurgical procedure (i.e., brain surgery). Accordingly, the sample being viewed through the surgical imaging device may be a sample of organic tissue of a patient and may in particular be the surgical site that the surgeon operates on during the surgical procedure, e.g., the brain. However, the proposed concept is also suitable for other types of surgery, such as eye surgery or cardiac surgery.

Fig. 1b shows a schematic diagram of an example of a surgical imaging system 100, and in particular of a surgical microscope system 100, comprising the system 110 and a microscope 130. The surgical microscope system 100 shown in Fig. 1b comprises a number of optional components, such as a base unit 105 (comprising the system 110) with a (rolling) stand, an auxiliary display 140 that may be arranged at the base unit, and the arm 120 that holds the microscope 130 in place, and is coupled to the base unit and to the microscope 130. In Fig. 1b, the arm 120 is a robotic arm used to change the position (including the orientation) of the surgical imaging device 130. Alternatively, a different type of automated imaging device positioning system may be used, such as a rail-based system arranged at the ceiling of the operating room. Yet alternatively, no automated imaging device positioning system may be used. In general, these optional and non-optional components may be coupled to the system 110 which may be configured to control and/or interact with the respective components.

In the proposed concept, the system 110 is used for the purpose of generating a digital view of a sample, such as a portion of a body of a patient. During normal operation, this digital view is generated using image data of the surgical imaging device, e.g., by performing image processing on the image data of the surgical imaging device. The digital view is then provided to a display device 140, such as ocular displays, a stereo head-mounted display or a monitor. This digital view (e.g., of the surgical site) is created and provided to the display device of the surgical imaging system as part of a display signal. In other words, the system may be configured to output a display signal to the display device 140 of the surgical or scientific imaging system, with the display signal comprising the (digital) view on the sample. The view may be viewed by the user, e.g., the surgeon, of the surgical imaging system. For example, the display signal may be a signal for driving (e.g., controlling) the respective display device. For example, the display signal may comprise video data and/or control instructions for driving the display. For example, the display signal may be provided via one of the one or more interfaces 112 of the system. Accordingly, the system 110 may comprise a video interface 112 that is suitable for providing the display signal to the display device 140 of the microscope system 100.

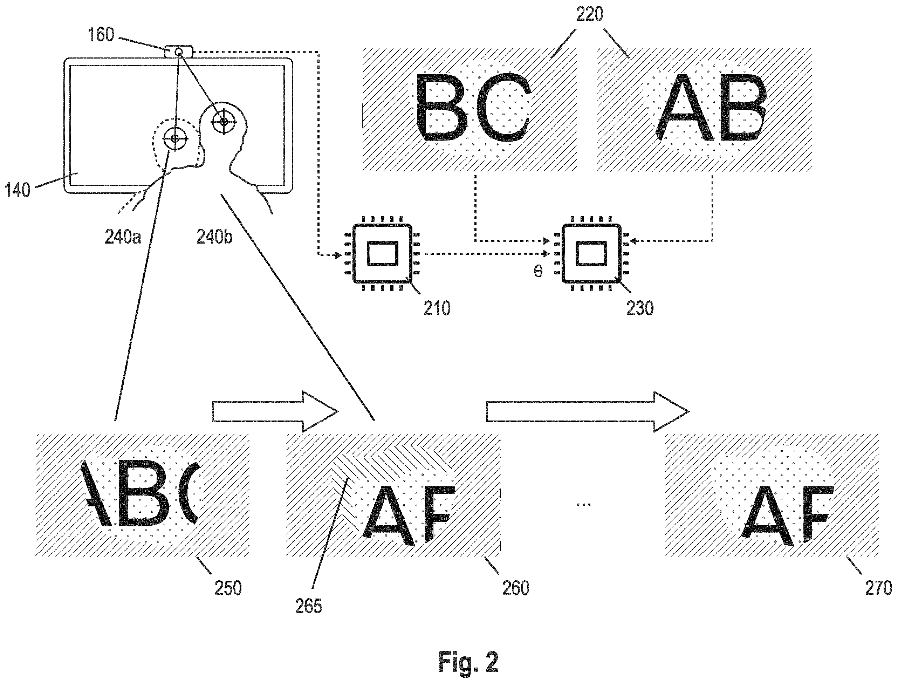

The image processing performed to generate the view on the sample is extended in case the user (i.e., the surgeon) decides to change the field of view that is to be shown. In surgical imaging systems with components that allow for automatic operations for changing the field of view (such as an automatic operation to perform at least one of a lateral movement of the surgical imaging device, a point lock operation, a return-to-position movement, a zooming operation or an operation for changing working distance), such as surgical imaging systems comprising an automated imaging device positioning system 120, such as a robotic arm, the change in the field of view is triggered via the surgical imaging device 100 and controlled by the system 100. The user can trigger the change of the field of view by providing an input to the system 110. Accordingly, the system is configured to obtain a user input related to a desired change of the field of view of the surgical imaging device 130 to a desired field of view on the sample. For example, this user input may be a command received via a user interface (such as a button, a mouse, a trackpad, a joystick, or other pointing devices, or microphone) of the surgical microscope system. Alternatively, image data of a user tracking camera P (shown in Fig. 2) of the surgical imaging system 100 may be used to obtain the user input, e.g., by using an image processing algorithm or a machine-learning model to determine at least one of a body motion, one or more gestures, or to perform head tracking of the user, with the user input comprising the body motion, the one or more gestures, or the information derived from the head tracking. Based on the user input, the system 110 triggers the change of the field of view, e.g., by triggering a corresponding automatic operation of the surgical imaging system. For example, this may include controlling the zoom functionality of the surgical imaging device 130, and/or controlling an automated imaging device positioning system (such as the robotic arm 120). In the latter case, the change of the field of view is based on mechanical movement of the automated imaging device positioning system or of at least one optical element arranged at the automated imaging device positioning system.

While the field of view is being changed by the surgical imaging system, the image data of the surgical image device (and, optionally, additional image data), is/are used to generate an emulation of the desired field of view. In this context, the term "emulation" means that the view is generated (i.e., "emulated") using image processing before the field of view of the image data provided by the surgical imaging device corresponds to the desired field of view. In particular, the system 110 is configured to perform image processing on the obtained image data and/or on additional image data to emulate the desired field of view during a time interval between triggering the change of the field of view and completion of the change of the field of view. In other words, "emulation" or "emulated of the desired field of view" refers to the process by which the surgical imaging system creates a simulated perspective using image processing techniques. Determining the emulation comprises generating an intermediate visual representation that matches the desired field of view before the actual change in the device's field of view is fully realized. During this transitional phase, additional data may be integrated and processed to enhance or refine the emulation, ensuring continuity and accuracy until the new field of view is achieved. The system then provides a view on the sample based on the emulation of the desired field of view to the display device 140 of the surgical imaging system.

There are various techniques that can be applied as part of the emulation. The most straightforward technique can be used if the desired field of view is entirely contained within the current field of view at the beginning of the change. In this case, the digital zoom functionality of the surgical imaging device may be used to emulate the desired field of view.

In other words, if the desired change of the field of view includes a narrowing of the field of view, the system 110 may generate the emulation of the desired field of view using a digital zoom functionality.

Things are less straightforward if the desired change of the field of view includes a lateral movement of the field of view (i.e., if the field of view is at least partially moved laterally, due to an x-y-movement or a point-lock operation of the surgical imaging device being used to laterally rotate the field of view around a fixed point in the field of view or due to a change in the angle of view of the imaging device towards the sample) and/or an expansion of the field of view. In some cases, this can be achieved by using a larger portion of the sensor than is used during normal operation of the surgical imaging device. For example, many optical imaging sensors used for surgical imaging devices support different imaging modes (that may differ with respect to resolution, frame rate, and sensor area being used). In many cases, a maximal framerate cannot be achieved if the entire sensor area is used. Therefore, during normal operation of the surgical imaging device, a smaller portion of the optical imaging sensor is used for imaging. This can be changed during the time interval between triggering the change of the field of view and completion of the change of the field of view. For example, the system may be configured to emulate the desired field of view by controlling at least one optical imaging sensor of the surgical imaging device to expand a sensor portion being used to generate the image data (compared normal operation of the surgical imaging device prior to and after the time interval), and to generate the emulation of the desired field of view based on the expanded sensor portion. For example, the system may be configured to control the at least one optical imaging sensor of the surgical imaging device to provide the image data using the entire sensor area of the at least one optical imaging sensor, or at least using a sensor area that is larger (e.g., at least 1% larger, or at least 2% larger, or at least 5% larger) than the sensor area being used during normal operation. However, there may be a tradeoff with respect to framerate, as the sensor readout speed may be lower than during normal operation. Accordingly, the system may be configured to generate the emulation of the desired field of view with a lower frame rate compared to the frame rate of the view of the sample prior to and/or after the change in the field of view.

Another technique that can be applied uses the availability of stereoscopic image data. Many surgical imaging devices are stereoscopic imaging devices, e.g., stereoscopic microscopes, as stereo imaging provides benefits with respect to depth perception, which is important during surgery. Accordingly, the act of obtaining the image data may comprise obtaining stereoscopic image data of two optical imaging sensors of the surgical imaging device. This stereoscopic image data comprises a first image and a second image, which have slightly different angles of view on the sample. Due to the different angles of view, images show slightly different portions of the sample. This effect is shown in Fig. 2, where the left and right images of the current stereo image pair 220 are at the top. This means that each of the images contains some pixels that depict an area of the sample not included in the respective other image. These pixels may be used for the emulation. In other words, the system may be configured to, if the desired change of the field of view includes a lateral movement of the field of view and/or an expansion of the field of view, generate the emulation of the desired field of view for one channel using the image data of the respective other channel.

Another technique is based on the use of another optical imaging sensor that captures a wider field of view, such as an overview camera 150 (shown in Fig. 1b). For example, the system may be configured to emulate the desired field of view based on additional image data of an additional imaging sensor 150 providing a wider field of view than the surgical imaging device 130. In other words, the system can emulate the desired field of view by incorporating extra image data from an auxiliary optical sensor that covers a broader area compared to the primary surgical imaging device. In image processing, this is achieved by integrating the image data from the surgical imaging device and the additional image data from the overview camera into the view. The additional camera provides peripheral information beyond the limited field of view of the main surgical imaging device. By aligning the images using image registration techniques (i.e., using feature detection and matching), the system may be configured to stitch together a composite view that accurately represents the sample.

Both the use of the additional information from the stereoscopic image data and the use of the additional image data from the widefield camera benefit from a robust technique for compositing the image data into the emulation of the desired field of view. For this purpose, a 2D to 3D to 2D (or 3D) image projection approach may be used, in which the pixels of the respective image data and/or additional image data are projected onto a three-dimensional representation of the sample, and then projected from the three-dimensional representation onto the two-dimensional or three-dimensional emulation. To generate the emulation using image projection, mathematical operations may be used to transform the image information that is contained in the three-dimensional representation of the sample into corresponding two-dimensional image information. These mathematical operations are based on the perspective of the view (e.g., of the image or images contained in the view) relative to the three-dimensional representation of the sample. This can be done with the help of a depth map, which can be used as a three-dimensional representation of the sample. In other words, the system may be configured to obtain a three-dimensional depth map of the sample, and to generate the emulation of the desired field of view (e.g., using image projection) based on the three-dimensional depth map of the sample and based on the image data and/or additional image data. A depth map of a sample is a three-dimensional representation of distances of points of the sample from a reference point, such as the surgical imaging system. For example, the system may be configured to determine the depth map of the sample, and to combine the (stereoscopic) image data and/or the additional image data using image projection using the depth map to obtain the emulation of the desired field of view. In this case, the pixels of the (stereoscopic) image data and/or additional image data may first be projected onto the three-dimensional depth map, and then re-projected, from the three-dimensional depth map, onto the image planes used for the emulation of the desired field of view (i.e., for the view on the sample). In particular, using the available (additional) image data, the color and/or intensity at each (three-dimensional) point of the depth map may be determined, and used to fill in the area(s) of the desired field of view that are not contained in the respective portion of the image data.

There are various approaches for determining suitable depth maps, such as optical or ultrasound time-of-flight sensors. As an alternative, the stereoscopic image data may be used to generate the depth map. In other words, the system may be configured to generate the three-dimensional depth map using stereo disparity analysis based on the stereoscopic image data. Stereo disparity analysis, also known as stereopsis, is a technique used to determine depth information from two or more images taken from slightly different viewing angles. This process involves identifying corresponding points between the images and calculating the difference in their positions, which is referred to as disparity. The disparity values are then used to estimate the depth map of the sample. Thus, the three-dimensional depth may be generated without requiring an additional depth sensor, which saves cost and lowers implementation complexity.

The depth map can also be used to fill in the areas that are obstructed in one of the images. In particular, the system may be configured to determine, for at least one of the channels of the stereoscopic image data, an area being affected by an obstruction obscuring a view on the sample, and to map one or more image segments of the respective other channel onto the area being affected by the obstruction. To differentiate obstructions from permanent features of the sample, multiple depth maps may be determined and used to identify discrepancies that would indicate an obstruction from one angle of view. For example, the system may be configured to determine the area being affected by an obstruction obscuring a view on the sample based on a depth disparity between a first depth map being generated starting from a first image (e.g., one of the stereoscopic channels) and a second depth map being generated starting from the second image (e.g., the other of the stereoscopic channels). For example, if the depths for a point on the sample differ by at least a threshold value, e.g., at least 1 cm, or at least 10%, it may be assumed that the disparity is caused by an obstruction that obstructs the view on the sample for one of the angles of view (but not the other).

In general, the aforementioned image processing operations may be computationally expensive. To avoid stuttering, the system may be configured to generate the emulation of the desired field of view with a lower image resolution compared to an image resolution of the view of the sample prior to and/or after the change in the field of view.

As the field of view is changed by the surgical imaging system or surgical imaging device, the field of view shown in the image data (and, in some cases, the additional image data) changes as well. Therefore, during the emulation of the desired field of view, the image processing operations are adapted to the field of view currently shown in the image data and/or additional image data. In other words, the system may be configured to adapt the image processing based on a progress of the change of the field of view (as shown in the image data and/or additional image data) until the change of the field of view is completed. Generally, this adaptation can be done by predicting the current field of view of the image data and/or additional image data when generating new image frames for the emulation of the desired field of view. Alternatively, the image frames of the image data (and/or of the additional image data) may comprise metadata (e.g., zoom level, working distance, position of robotic arm, angle of view) representing the respective current field of view of the surgical imaging device, with the system being configured to adapt the image processing based on the metadata representing the current field of view.

In the proposed surgical imaging system, optical imaging sensor(s) of the surgical imaging device 130 (or additional optical imaging sensors 150) are used to provide the aforementioned image data. Accordingly, the optical imaging sensor(s), which may be part of the imaging device 120 (e.g., of the microscope) may be configured to generate the image data. For example, the optical imaging sensor(s) of the imaging device 120 may comprise or be an APS (Active Pixel Sensor)-based imaging sensor or a CCD (Charge-Coupled-Device)-based imaging sensor. For example, in APS-based imaging sensors, light is recorded at each pixel using a photodetector and an active amplifier of the pixel. APS-based imaging sensors are often based on CMOS (Complementary Metal-Oxide-Semiconductor) or S-CMOS (Scientific CMOS) technology. In CCD-based imaging sensors, incoming photons are converted into electron charges at a semiconductor-oxide interface, which are subsequently moved between capacitive bins in the imaging sensor by circuitry of the imaging sensor to perform the imaging.

The one or more interfaces 112 of the system 110 may correspond to one or more inputs and/or outputs for receiving and/or transmitting information, which may be in digital (bit) values according to a specified code, within a module, between modules or between modules of different entities. For example, the one or more interfaces 112 may comprise interface circuitry configured to receive and/or transmit information. The one or more processors 114 of the system 110 may be implemented using one or more processing units, one or more processing devices, any means for processing, such as a processor, a computer or a programmable hardware component being operable with accordingly adapted software. In other words, the described function of the one or more processors 114 may as well be implemented in software, which is then executed on one or more programmable hardware components. Such hardware components may comprise a general-purpose processor, a Digital Signal Processor (DSP), a micro-controller, etc. The one or more storage devices 116 of the system 110 may comprise at least one element of the group of a computer readable storage medium, such as a magnetic or optical storage medium, e.g., a hard disk drive, a flash memory, Floppy-Disk, Random Access Memory (RAM), Programmable Read Only Memory (PROM), Erasable Programmable Read Only Memory (EPROM), an Electronically Erasable Programmable Read Only Memory (EEPROM), or a network storage.

More details and aspects of the system 110 and of the surgical imaging system 100 are mentioned in connection with the proposed concept or one or more examples described above or below (e.g., Figs. 2 to 4). The system 110 and the surgical imaging system 100 may comprise one or more additional optional features corresponding to one or more aspects of the proposed concept or one or more examples described above or below.

In the following, two sets of examples are given to illustrate and expand upon the capabilities of the system 110 and surgical imaging system 100 of Figs. 1a and 1b. These examples can be combined with the examples given in connection with Figs. 1a and 1b as well as with each other.

A first set of examples relates to the use of an interpolated 3D reconstruction for adjusting an observation angle without delay. This proposed concept takes advantage of image interpolation capabilities inherent in stereo microscopes. It allows for the immediate visualization of any selected observation angle by the user, eliminating delays.

The concept proposed in the first set of examples capitalizes on the capability to interpolate images from a stereo microscope, enabling instantaneous visualization of any chosen observation angle without delay. By deriving a depth map from a pair of stereo images, the system can produce real-time, interpolated views from various angles, even those beyond the physical capabilities of the microscope's imaging channels. This allows surgeons to adjust the observation angle intuitively and responsively using different input methods, such as head tracking, gestures, or input devices. Simultaneously, the robotic arm begins moving the microscope towards the selected angle (according to the desired field of view), updating the visualization with actual imaging data as it becomes available. This approach enhances user experience by offering immediate feedback, increasing precision, and streamlining surgical workflows.

In the realm of surgical microscopy, swiftly and intuitively adjusting the observation angle is beneficial for effective visualization and achieving surgical precision. The proposed concept according to the first set of examples introduces a mechanism to deliver immediate visual feedback on the desired observation angle through interpolated 3D reconstruction, effectively bridging the gap between user input and the physical movement of the microscope.

In the first set of examples, a stereo microscope system is equipped with a robotic or motorized arm capable of adjusting its position and observation angle. Additionally, the stereo microscope system features a smart (contactless) control platform (e.g., implemented by the system 110) that allows users to select their desired observation angle using various input methods, including body motion, gestures, head tracking, mouse, trackpad, joystick, or other pointing devices. By utilizing stereo images from the microscope's left and right imaging channels, the system may calculate a depth map through disparity measurements. This calculated depth map facilitates the generation of interpolated images from any desired observation angle, providing immediate visual feedback to the user.

The process flow of this system is as follows. First, the surgeon selects a desired observation angle using their preferred input method (user input). Second, a depth map is calculated. The system captures stereo images from both the left and right imaging channels. Disparity between these images is calculated to generate a depth map of the observed tissue. Third, image interpolation is performed. Using the depth map, the system interpolates an image corresponding to the selected observation angle (i.e., the emulation of the desired field of view). This may include angles beyond the original left and right perspectives, including up/down (north/south) adjustments. Fourth, the interpolated image may be displayed to the user in real-time (immediate display), providing immediate visual feedback. This experience resembles rotating a 3D model in CAD software, which is intuitive and responsive. Simultaneously, the robotic arm begins moving the microscope towards the selected angle. As the microscope moves, real imaging data replaces the interpolated views, reducing any artifacts or missing information. In addition, occlusions and blind spots may be mitigated. Areas not visible to the original cameras may appear in the interpolated images. These areas can be highlighted to indicate missing information. As the microscope physically moves, these blind spots may be resolved with actual imaging data.

Fig. 2 shows a schematic diagram of an example of a real-time image interpolation and angle adjustment system for stereo microscopes. In the example given in Fig. 2, the desired field of view is determined using a position 240a, 240b of an observer relative to a monitor 140 and its monitor camera 160. The monitor camera image data is provided to a processor 210 (e.g., of the system 110) to calculate the observer's position. A left image and a right image of a current stereo image pair 220 are provided to a processor 230 (e.g., of the system 110) to calculate an image corresponding to the observer's position. On the bottom row, the resulting images are shown. Image 250 shows the field of view for the before position 240a of the observer, while initial image 260 (instantly) shows the field of view for the after position 240b. In initial image 260, a blind spot 265 is shown that is not contained in the available images. After some delay, as the microscope moves to a new position, the final image 270 shows the field of view for the after position. Fig. 2 illustrates the process flow of the proposed mechanism, which uses stereo images from left and right channels to calculate a depth map, generating real-time interpolated images corresponding to a chosen observation angle (and therefore desired field of view). The image interpolation provides immediate visual feedback to the surgeon while the robotic arm gradually adjusts the microscope's position to the new physical angle. Any missing data resulting from occlusions or blind spots is corrected as actual imaging data replaces the interpolated view during this movement.

The concept proposed in the first set of examples offers an unrestricted angle range where the algorithm can interpolate images from any angle beyond the initial left and right imaging channels. It enhances the user experience by providing immediate visual feedback, making angle adjustments more intuitive and efficient. Additionally, it improves workflow by reducing delays caused by slow robotic arm movements, thus streamlining surgical procedures. The concept proposed in the first set of examples also supports flexible input methods, being compatible with various devices and methods, which accommodates diverse surgical environments and preferences. Scalability is provided by using additional imaging channels, such as extra stereo views or wide-field cameras, which can be incorporated to enhance interpolation accuracy and extend the observable range. For example, ophthalmic microscopes may offer separate views for both the surgeon and assistant, or systems might incorporate an overview camera that aids navigation.

In some examples, advanced interpolation techniques can be implemented using machine learning algorithms to improve accuracy and manage complex tissue structures. Additionally, or alternatively, user interface customization options may allow for customizable controls and display settings tailored to individual surgeon preferences. For example, the interface may show observation angles saved in memory, previously used ones, or those recommended by the robot as potentially optimal.

The mechanism proposed in the first set of examples is designed to connect seamlessly with larger systems and existing products. For example, an integration with surgical navigation systems can be implemented, where the mechanism interfaces with current surgical navigation platforms, thereby enhancing overall functionality. In such cases, the displayed calculated image may be combined with navigation (IGS) data as though the microscope were physically positioned at that location.

The proposed concept provides a microscope with immediate visualization of new observation angles without needing physical adjustments. The proposed mechanism can be used to interpolate images from stereo pairs to create new viewpoints. It may use depth maps and image interpolation for adjusting observation angles. It provides low response time during adjustments to the observation angle. It provides immediate angle adjustments and an enhanced user experience.

More details and aspects of the first set of examples are mentioned in connection with the proposed concept or one or more examples described above or below (e.g., Figs. 1a to 1b, 3 to 4). The first set of examples may comprise one or more additional optional features corresponding to one or more aspects of the proposed concept or one or more examples described above or below.

A second set of examples relates to enhancing responsiveness in robotic surgical microscopes through digital image manipulation. According to the second set of examples, the proposed mechanism aims to improve responsiveness and reduce latency in robotic surgical microscopes by using digital image manipulation techniques to compensate for delays caused by the physical movement of optical components.

A core insight of the second set of examples is to combine digital image manipulation with the actual movement of robotic surgical microscopes, with the goal of significantly decreasing the perceived delay or latency. By introducing a mechanism that uses both digital zoom and repositioning alongside mechanical adjustments, the concept proposed according to the second set of examples provides near-instantaneous responsiveness. Meanwhile, the physical optics make their adjustments in the background. This mechanism effectively tackles the issue of latency and consequently improves the overall experience for users.

This addresses several key pain points in surgical settings. Firstly, it tackles latency reduction by providing a (virtual) low-latency system. This significantly enhances real-time responsiveness, which is crucial during surgeries. Secondly, it improves the user experience. By reducing delays, the system facilitates smoother and more intuitive interactions for surgeons, thereby encouraging its adoption and consistent use. Lastly, it boosts workflow efficiency by maintaining an efficient surgical workflow. It achieves this by reducing or eliminating delays caused by mechanical adjustments, ensuring a seamless operation process.

The mechanism proposed according to the second set of examples integrates digital image processing with the physical adjustments of a robotic surgical microscope. It uses a digital manipulation module, which performs real-time digital adjustments such as zooming and repositioning to provide immediate visual feedback to the surgeon. Second, the physical adjustment module controls the mechanical movement of the microscope's optical elements, gradually aligning them with the digital adjustments. Finally, a synchronization algorithm is used to ensure that the digital and physical adjustments are synchronized, providing a seamless transition from digital to optical accuracy. These modules and algorithms may be provided or implemented by the system 110 of Figs. 1a and 1b, for example.

In the following, some examples are given with respect to how the mechanism is implemented. For example, digital zoom may be used. Initially, when the surgeon initiates a zoom-in action, the system immediately applies a digital zoom, providing instant visual feedback with a slight decrease in resolution. Simultaneously, the physical adjustment module begins to move the optical elements to achieve the desired zoom level. As the physical zoom progresses, the system gradually reduces the digital zoom, effectively blending the two to maintain a clear, high-resolution image. Once the optical zoom reaches its target (i.e., the desired field of view), the digital zoom is fully phased out, resulting in a high-quality, zoomed-in optical image.

Another example is Field of View expansion. Initially, to quickly expand the field of view (FOV), the system may employ digital manipulation to read from a broader sensor area. This may temporarily reduce the frame rate but provides an immediate wider view. Meanwhile, the physical adjustment module repositions the optical elements to match the expanded FOV. As these components catch up, the frame rate normalizes. In some cases, an additional wide-field camera can provide missing image areas, seamlessly integrating with the primary view for continuous and comprehensive visualization.

The point-lock function is another feature. During this function, when the microscope needs to rotate around a fixed point on the imaged surface, the system may initially manipulate the image digitally to simulate the rotation, ensuring that the visual remains centered and steady. As the physical adjustment module rotates the microscope, digital image manipulation synchronizes with these movements, gradually reducing the digital input. For more complex scenarios, the system can create a 3D model of the tissue from stereoscopic images. This model can be digitally rotated to match the physical adjustments, providing a realistic and continuous view of the surgical site.

More details and aspects of the second set of examples are mentioned in connection with the proposed concept or one or more examples described above or below (e.g., Figs. 1a to 2, 3 to 4). The first set of examples may comprise one or more additional optional features corresponding to one or more aspects of the proposed concept or one or more examples described above or below.

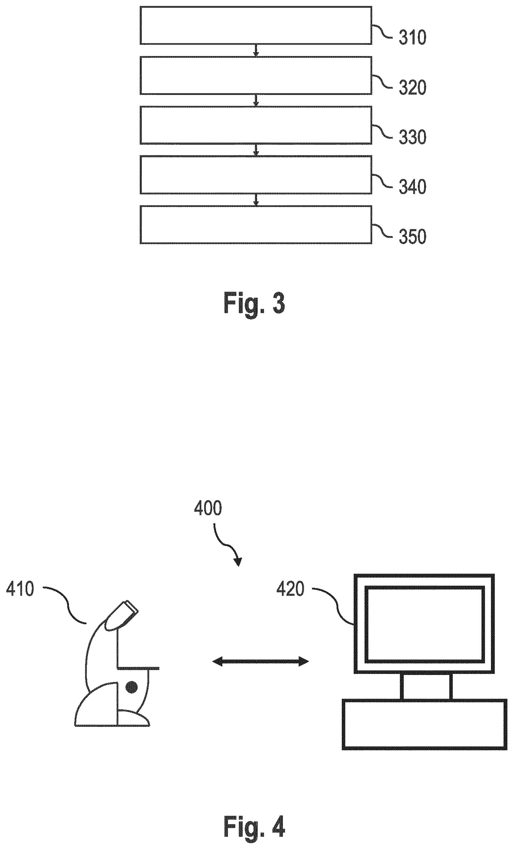

Fig. 3 shows a flow chart of an example of a method for a surgical imaging system. For example, the method may be performed by the surgical imaging system 100 shown in Fig. 1b, and in particular by the system 110 shown in Figs. 1a and 1b. The method comprises obtaining 310 a user input related to a desired change of a field of view of the surgical imaging device to a desired field of view on the sample. The method comprises obtaining 320 image data of the surgical imaging device. The method comprises triggering 330 the change of the field of view based on the user input. The method comprises performing 340 image processing on the obtained image data and/or on additional image data to emulate the desired field of view during a time interval between triggering the change of the field of view and completion of the change of the field of view. The method comprises providing 350 a view on the sample based on the emulation of the desired field of view to a display device of the surgical imaging system. Features discussed in connection with the surgical imaging system of Figs. 1a to 1b and the first and second set of examples may likewise be included in the method of Fig. 3.

More details and aspects of the method are mentioned in connection with the proposed concept, or one or more examples described above or below (e.g., Fig. 1a to 2, 4). The method may comprise one or more additional optional features corresponding to one or more aspects of the proposed concept, or one or more examples described above or below.

As used herein the term "and/or" includes any and all combinations of one or more of the associated listed items and may be abbreviated as "/".

Although some aspects have been described in the context of an apparatus, it is clear that these aspects also represent a description of the corresponding method, where a block or device corresponds to a method step or a feature of a method step. Analogously, aspects described in the context of a method step also represent a description of a corresponding block or item or feature of a corresponding apparatus.

Some embodiments relate to an imaging device comprising a system as described in connection with one or more of the Figs. 1a to 3. Alternatively, an imaging device, such as a microscope, exoscope or endoscope, may be part of or connected to a system as described in connection with one or more of the Figs. 1a to 3. Fig. 4 shows a schematic illustration of a system 400 configured to perform a method described herein. The system 400 comprises an imaging device 410 and a computer system 420. The imaging device 410 is configured to take images and is connected to the computer system 420. The computer system 420 is configured to execute at least a part of a method described herein. The computer system 420 may be configured to execute a machine learning algorithm. The computer system 420 and imaging device 410 may be separate entities but can also be integrated together in one common housing. The computer system 420 may be part of a central processing system of the imaging device 410 and/or the computer system 420 may be part of a subcomponent of the imaging device 410, such as a sensor, an actor, a camera or an illumination unit, etc., of the imaging device 410.

The computer system 420 may be a local computer device (e.g. personal computer, laptop, tablet computer or mobile phone) with one or more processors and one or more storage devices or may be a distributed computer system (e.g. a cloud computing system with one or more processors and one or more storage devices distributed at various locations, for example, at a local client and/or one or more remote server farms and/or data centers). The computer system 420 may comprise any circuit or combination of circuits. In one embodiment, the computer system 420 may include one or more processors which can be of any type. As used herein, processor may mean any type of computational circuit, such as but not limited to a microprocessor, a microcontroller, a complex instruction set computing (CISC) microprocessor, a reduced instruction set computing (RISC) microprocessor, a very long instruction word (VLIW) microprocessor, a graphics processor, a digital signal processor (DSP), multiple core processor, a field programmable gate array (FPGA), for example, of a imaging device or a imaging device component (e.g. camera) or any other type of processor or processing circuit. Other types of circuits that may be included in the computer system 420 may be a custom circuit, an application-specific integrated circuit (ASIC), or the like, such as, for example, one or more circuits (such as a communication circuit) for use in wireless devices like mobile telephones, tablet computers, laptop computers, two-way radios, and similar electronic systems. The computer system 420 may include one or more storage devices, which may include one or more memory elements suitable to the particular application, such as a main memory in the form of random access memory (RAM), one or more hard drives, and/or one or more drives that handle removable media such as compact disks (CD), flash memory cards, digital video disk (DVD), and the like. The computer system 420 may also include a display device, one or more speakers, and a keyboard and/or controller, which can include a mouse, trackball, touch screen, voice-recognition device, or any other device that permits a system user to input information into and receive information from the computer system 420.

Some or all of the method steps may be executed by (or using) a hardware apparatus, like for example, a processor, a microprocessor, a programmable computer or an electronic circuit. In some embodiments, some one or more of the most important method steps may be executed by such an apparatus.

Depending on certain implementation requirements, embodiments of the invention can be implemented in hardware or in software. The implementation can be performed using a non-transitory storage medium such as a digital storage medium, for example a floppy disc, a DVD, a Blu-Ray, a CD, a ROM, a PROM, and EPROM, an EEPROM or a FLASH memory, having electronically readable control signals stored thereon, which cooperate (or are capable of cooperating) with a programmable computer system such that the respective method is performed. Therefore, the digital storage medium may be computer readable.

Some embodiments according to the invention comprise a data carrier having electronically readable control signals, which are capable of cooperating with a programmable computer system, such that one of the methods described herein is performed.

Generally, embodiments of the present invention can be implemented as a computer program product with a program code, the program code being operative for performing one of the methods when the computer program product runs on a computer. The program code may, for example, be stored on a machine readable carrier.

Other embodiments comprise the computer program for performing one of the methods described herein, stored on a machine readable carrier.

In other words, an embodiment of the present invention is, therefore, a computer program having a program code for performing one of the methods described herein, when the computer program runs on a computer.

A further embodiment of the present invention is, therefore, a storage medium (or a data carrier, or a computer-readable medium) comprising, stored thereon, the computer program for performing one of the methods described herein when it is performed by a processor. The data carrier, the digital storage medium or the recorded medium are typically tangible and/or non-transitionary. A further embodiment of the present invention is an apparatus as described herein comprising a processor and the storage medium.

A further embodiment of the invention is, therefore, a data stream or a sequence of signals representing the computer program for performing one of the methods described herein. The data stream or the sequence of signals may, for example, be configured to be transferred via a data communication connection, for example, via the internet.

A further embodiment comprises a processing means, for example, a computer or a programmable logic device, configured to, or adapted to, perform one of the methods described herein.

A further embodiment comprises a computer having installed thereon the computer program for performing one of the methods described herein.

A further embodiment according to the invention comprises an apparatus or a system configured to transfer (for example, electronically or optically) a computer program for performing one of the methods described herein to a receiver. The receiver may, for example, be a computer, a mobile device, a memory device or the like. The apparatus or system may, for example, comprise a file server for transferring the computer program to the receiver.

In some embodiments, a programmable logic device (for example, a field programmable gate array) may be used to perform some or all the functionalities of the methods described herein. In some embodiments, a field programmable gate array may cooperate with a microprocessor to perform one of the methods described herein. Generally, the methods are preferably performed by any hardware apparatus.

### List of reference Signs

- 10: Sample
- 100: Surgical imaging system
- 110: System
- 120: Robotic arm
- 130: Surgical imaging device
- 140: Display device
- 150: Widefield camera
- 160: User tracking camera
- 210: Processor
- 220: Current stereo image pair
- 230: Processor
- 240a: Before position of observer
- 240b: After position of observer
- 250: Image of field of view for the before position of the observer
- 260: Initial image of field of view for the after position of the observer
- 265: Blind spot
- 270: Final image of field of view for the after position of the observer
- 310: Obtaining a user input related to a desired change of a field of view
- 320: Obtaining image data
- 330: Triggering the change of the field of view
- 340: Performing image processing to emulate the desired field of view
- 350: Providing a view on the sample
- 400: System
- 410: Imaging device
- 420: Computer system

## Claims

1. A system (110) for a surgical imaging system (100), the system comprising one or more processors and one or more storage devices, wherein the system is configured to:
obtain a user input related to a desired change of a field of view of a surgical imaging device (130) to a desired field of view on the sample;
obtain image data of the surgical imaging device;
trigger the change of the field of view based on the user input;
perform image processing on the obtained image data and/or on additional image data to emulate the desired field of view during a time interval between triggering the change of the field of view and completion of the change of the field of view; and
provide a view on the sample based on the emulation of the desired field of view to a display device (140) of the surgical imaging system.

2. The system according to claim 1, wherein the system is configured to trigger an automatic operation of the surgical imaging system to perform at least one of a lateral movement of the surgical imaging device, a point lock operation, a return-to-position movement, a zooming operation or an operation for changing working distance to trigger the change of the field of view.

3. The system according to one of the claims 1 or 2, wherein the system is configured to control an automated imaging device positioning system (120) to control the field of view of the surgical imaging device (130), wherein the change of the field of view is based on mechanical movement of the automated imaging device positioning system or of at least one optical element arranged at the automated imaging device positioning system.

4. The system according to one of the claims 1 to 3, wherein the system is configured to adapt the image processing based on a progress of the change of the field of view until the change of the field of view is completed.

5. The system according to claim 4, wherein image frames of the image data comprise metadata representing a current field of view of the surgical imaging device, with the system being configured to adapt the image processing based on the metadata representing the current field of view.

6. The system according to one of the claims 1 to 5, wherein the system is configured to, if the desired change of the field of view includes a lateral movement of the field of view and/or an expansion of the field of view, emulate the desired field of view by controlling at least one optical imaging sensor of the surgical imaging device to expand a sensor portion being used to generate the image data, and to generate the emulation of the desired field of view based on the expanded sensor portion.

7. The system according to one of the claims 1 to 6, wherein the act of obtaining the image data comprises obtaining stereoscopic image data of two optical imaging sensors of the surgical imaging device, with the system being configured to, if the desired change of the field of view includes a lateral movement of the field of view and/or an expansion of the field of view, generate the emulation of the desired field of view for one channel using the image data of the respective other channel.

8. The system according to one of the claims 1 to 7, wherein the system is configured to, if the desired change of the field of view includes a lateral movement of the field of view and/or an expansion of the field of view, emulate the desired field of view based on additional image data of an additional imaging sensor (150) providing a wider field of view than the surgical imaging device (130).

9. The system according to one of the claims 1 to 8, wherein the system is configured to obtain a three-dimensional depth map of the sample, and to generate the emulated field of view based on the three-dimensional depth map of the sample and based on the image data and/or additional image data.

10. The system according to claim 9, wherein the act of obtaining the image data comprises obtaining stereoscopic image data of two optical imaging sensors of the surgical imaging device, with the system being configured to generate the three-dimensional depth map using stereo disparity analysis based on the stereoscopic image data.

11. The system according to one of the claims 1 to 10, wherein the system is configured to generate the emulation of the desired field of view with a lower frame rate and/or a lower image resolution compared to a frame rate or image resolution of the view of the sample prior and/or after the change in the field of view.

12. A surgical imaging system (100) comprising the system (110) according to one of the claims 1 to 11, the surgical imaging device (130) and a display device (140).

13. The surgical imaging system (100) according to claim 12, comprising an automated imaging device positioning system (120), such as a robotic arm (120), for controlling the field of view of the surgical imaging device (130) on the sample (10).

14. A method for a surgical imaging system, the method comprising:
obtaining (310) a user input related to a desired change of a field of view of the surgical imaging device to a desired field of view on the sample;
obtaining (320) image data of the surgical imaging device;
triggering (330) the change of the field of view based on the user input;
performing (340) image processing on the obtained image data and/or on additional image data to emulate the desired field of view during a time interval between triggering the change of the field of view and completion of the change of the field of view; and
providing (350) a view on the sample based on the emulation of the desired field of view to a display device of the surgical imaging system.

15. A computer program having a program code for performing a method according to claim 14 when the program is executed on processor.
